(19) Europäisches Patentamt
European Patent Office
Office européen des brevets

(11) EP 0 952 884 B1

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(21) Anmeldenummer: 97953737.0

(22) Anmeldetag: **04.12.1997**

(51) Int Cl.7: **B01D 63/10**

(86) Internationale Anmeldenummer:
**PCT/EP97/06785**

(87) Internationale Veröffentlichungsnummer:
**WO 98/24539 (11.06.1998 Gazette 1998/23)**

(54) **WICKELMODUL**

WOUND MODULE

MODULE A MEMBRANES ENROULEES

(84) Benannte Vertragsstaaten:
**DE ES FR IT**

(30) Priorität: **06.12.1996 DE 19650648**

(43) Veröffentlichungstag der Anmeldung:
**03.11.1999 Patentblatt 1999/44**

(73) Patentinhaber: **SARTORIUS AG**
**37075 Göttingen (DE)**

(72) Erfinder: **SCHMIDT, Hans-Weddo**
**D-37181 Hardegsen (DE)**

(56) Entgegenhaltungen:
**EP-A- 0 492 250        DE-C- 4 328 407**
**US-A- 4 744 900        US-A- 4 814 079**
**US-A- 5 580 452**

**Beschreibung**

Die Erfindung betrifft einen für die Crossflow-Filtration zu verwendenen Wickelmodul, der aus einem Gehäuse mit einem darin angeschlossenen Wickel besteht und der mit einem nahezu konstanten Transmembrandruck betrieben werden kann.

Derartige Wickelmodule können in Filtrationsanlagen zur Filtration von Fluiden, wie Flüssigkeiten, Gase, Emulsionen, Suspensionen und Aerosolen, von Lebensmitteln und Getranken, wie Bier, Bierwürze, Wein, Saft, Wasser, Mineralwasser und Milch und von Trink-, Brauch- und Abwasser, von Gasen und Lösungen im Pharma-, Medizin-, Kosmetik-, Chemie-, Biotechnologie-, Gentechnik-, Elektronik-, Umweltschutz- und Laborbereich verwendet werden. Sie können in Filtrationsvorrichtungen zur Stofftrennung, zur Entionisierung von Wasser, zur Entpyrogenisierung und Sterilisierung von Lösungen und zur Abtrennung von Schadstoffen aus Fluiden, für die Filtration und Aufkonzentrierung biologischer Lösungen, für die Abtrennung von Mikroorganismen, wie Bakterien, Viren und von Zellbestandteilen, für die Aufbereitung von Blut und von anderen Korperflussigkeiten, für die Entsalzung von Proteinlösungen und anderen biologischen Medien, für die Analyse und Stofftrennung von Ionen, Makromolekülen und Biomolekülen, nämlich von Kohlenhydraten, Peptiden, Proteinen und Nucleinsäuren sowie für die Abtrennung von Schadstoffen, wie Schwermetallen aus Fluiden verwendet werden.

Nach dem Crossflow-Prinzip zu verwendende Wickelmodule sind zum Beispiel aus der DE-PS 43 28 407 C1 bekannt. Sie bestehen aus einem Gehäuse mit einem darin angeschlossenen Wickel. Dieser besteht aus Einheiten von Membrantaschen, die einen Filtratäbstandshalter aus einem Gewebe zur Ausbildung eines Filtratkanals einschließen und die von einem Retentatabstandshalter aus einem Gewebe oder extrudierten Netz zur Ausbildung eines Retentatkanals umgeben sind. Die Einheiten sind um ein zentrales Kernrohr gewickelt. Bei derartigen Wickelmodulen strömt das zu filtrierende Fluid vom Retentateingang zum Retentatausgang tangential durch den Retentatkanal über die Membranen der Membrantaschen hinweg. Das durch die Membranen permeierende Filtrat wird über den Filtratkanal in das Kernrohr geleitet und von dort über den Filtratausgang aus dem Gehäuse des Wickelmoduls abgeführt. Dabei nimmt der Druck des Retentats vom Retentateingang zum Retentatausgang ab, während der Druck des Filtrats in gleicher Richtung, also zum Filtratausgang hin, ansteigt. Nachteilig ist, daß bei derartigen Wickelmodulen die Druckdifferenz zwischen der Retentat- und der Filtratseite der Membran (Transmembrandruck) über die Filterfläche der Membran hinweg, also vom Retentateingang zum Retentatausgang hin, abnimmt. Das hat zur Folge, daß die Filtrationsleistung der Membran in Richtung Retentatausgang abnimmt und die Membran in Richtung Retentateingang einer großen Druckdifferenz ausgesetzt ist. Letzteres führt zur mechanischen Beschädigung der Membran oder zur raschen Verstopfung der Membranporen oder zur Ausbildung einer filtrationshemmenden Deckschicht auf der Membran, die vom Retentateingang aus zum Retentatausgang hin fortschreitet. Da sich entlang der Membranfläche betrachtet innerhalb des Retentatkanals Bereiche mit unterschiedlichen Drücken ausbilden, weicht der Transmembrandruck über einen großen Teil der Membranfläche erheblich von seinem optimalen Sollwert ab. Außerdem ist die Reinigung in dem Bereich des größten Transmembrandrucks erschwert, weil die Rückspülflüssigkeit überwiegend die anderen nicht verstopften Bereiche passiert.

In der US-A-4 814 079 ist ein für die Crossflow-Filtration zu verwendendes Wickelmodul beschrieben, bestehend aus einem Gehäuse mit einem darin eingeschlossenen Wickel, der aus Membrantaschen und Abstandshaltern besteht, die spiralförmig um ein zentrales an den Stirnseiten offenes Kernrohr gewickelt sind, wobei Retentatabstandshalter streifenförmig auf den Außenflächen der Membrantaschen angebracht sind und meander- oder serpentinartige Retentatkanäle ausbilden und wobei Filtratabstandshalter im Inneren der Membrantaschen eingeschlossen sind und einen spiralförmigen Filtratkanal ausbilden derart, daß der Wickel von mindestens zwei Arten Kanälen durchsetzt ist, die voneinander in Achsrichtung beabstandet sind. Während das zu filtrierende Medium die Retentatkanäle meander- oder serpentinartig überströmt, fließt das Filtrat spiralförmig über die Oberfläche des Kernrohres durchsetzende Bohrungen in das Kernrohr.

Der Erfindung liegt die Aufgabe zugrunde, einen nach dem Crossflow-Prinzip zu verwendenden Wicklemodui zu schaffen, der über die gesamte Membranfläche hinweg einen hohen Filtratfluß gewährleistet und durch Rückspülen sicher gereinigt werden kann. Eine weitere Aufgabe der Erfindung besteht darin, Verfahren zur Herstellung erfindungsgemäßer Wickelmodule vorzuschlagen.

Die Aufgabe wird durch einen Wickelmodul aus einem Gehäuse mit einem darin angeschlossenen Wickel gelöst, der aus Membrantaschen und Abstandshaltern besteht, die spiralförmig um ein zentrales an den Stirnseiten offenes Kernrohr gewickelt sind, wobei Retentatabstandshalter eine Außenfläche der Membrantaschen bedecken und Retentatkanäle ausbilden und wobei Filtratabstandshalter im Inneren der

Membrantaschen eingeschlossenen sind und Filtratkanäle ausbilden, und der Wickel von mindestens zwei radialen Kanälen durchsetzt ist, die voneinander in Achsrichtung beabstandet und zu den Filtratkanälen und zum Kernrohr hin offen sind. Die beiden an den Stirnseiten offenen Enden des Kernrohres sind außerhalb des Gehäuses durch eine Rückführleitung zur Regulierung des Filtratdrucks verbunden. Ein zwischen den radialen Kanälen liegender Abschnitt des Kernrohres ist geschlossen.

Durch die radialen Kanäle werden die Filtratkanäle verkürzt. Das Filtrat durchströmt die Filtratkanäle nicht mehr spiralförmig bis zum zentralen Kernrohr, wodurch der Druckabfall zum Filtratausgang hin deutlich vermindert ist. Durch die erfindungsgemäße Bauweise des Wickelmoduls wird das Filtrat veranlaßt, im Gleichstrom mit dem zu filtrierenden Fluid parallel zur Membranfläche zu zirkulieren und dabei durch die Membranfläche ein Gegendruckprofil zu erzeugen, derart, daß über die gesamte Membranfläche hinweg vom Retentateingang bis zum Retentatausgang eine nahezu konstante Druckdifferenz herrscht oder durch Regulierung der Drücke des Retentats und Filtrats ein konstanter Transmembrandruck einstellbar ist. Dadurch wird ein über die gesamte Membranfläche hinweg gleicher Filtratfluß gewährleistet und örtliche Verblockungen oder Belegungen mit einer Deckschicht auf der Membran, etwa im Bereich des Retentateingangs werden vermieden. Der Wickelmodul zeichnet sich durch eine hohe Filtrationsleistung und längere Standzeit zwischen erforderlich werdenden Regenerierungen durch zum Beispiel Rückspülen aus. Außerdem ist er durch Rückspülung sicher zu reinigen und weist nach Rückspülung seine Anfangsfiltrationsleistung auf.

In einer vorteilhaften Ausführungsform sind die radialen Kanäle in Achsrichtung möglichst weit voneinander beabstandet. Zur besseren Überströmung der Membranflächen von mit Partikeln belasteten zu filtrierenden Fluiden verfügen in einer weiteren Ausführungsform der Erfindung die Retentatabstandshalter über ein Hohlraumvolumen, daß größer ist als das Hohlraumvolumen der Filtratabstandshalter, vorzugsweise um mindestens 25% Beispilesweise werden als Retentatabstandshalter Gewebe, extrudierte Netze oder grobe Vliese verwendet, während die Filtratabstandshalter aus feineren Geweben oder Vliesen bestehen.

Erfindungsgemäß werden die Wickelmodule durch ein Verfahren hergestellt, daß die folgenden Schritte umfaßt:

a) bereichsweises Einbringen einer aushärtbaren Dichtungsmasse in die Retentatabstandshalter mit gleichem Abstand von den Stirnseiten der Retentatabstandshalter aber mit linear zunehmendem Abstand der Bereiche zueinander derart, daß im Wickel die mit Dichtungsmasse angefüllten Bereiche der Retentatabstandshalter auf einer Geraden liegen, die von der Peripherie des Wickels zu seinem Kernrohr verläuft, und daß die Dichtungsmasse über der Fläche der Abstandshalter übersteht,

b) Wickeln von Membrantaschen mit im Innern befindlichen Filtratabstandshaltern und von nach Schritt a) vorbehandelten Retentatabstandshaltern, die eine Außenfläche der Membrantaschen bedecken, um das zentrale Kernrohr zu dem Wickel,

c) Ausbilden von mindestens zwei radialen Kanälen durch den Wickel, die sich von der Peripherie des Wickels bis in das Innere des offenen Kernrohres an jeder Stirnseite des Wickels erstrecken und innerhalb der mit Dichtungsmasse angefüllten Bereiche der Retentatabstandshalter verlaufen,

d) Verschließen der Kanäle an der Peripherie des Wickels und

e) Aushärtenlassen der Dichtungsmasse.

Ein weiteres erfindungsgemäßes Verfahren zur Herstellung eines Wickelmoduls bei dem die Filtratabstandshalter ein um mindestens 25% geringeres Hohlraumvolumen als die Retentatabstandshalter besitzen, umfaßt die Schritte:

a) Ausbilden von mindestens zwei radialen Durchgängen durch den Wickel, die voneinander in Achsrichtung beabstandet sind und sich von der Peripherie des Wickels bis in das Innere des offenen Kernrohres an jeder Stirnseite des Wickels erstrecken,

b) Einschieben eines schlüssigen Kolbens in den offenen Abschnitt des Kernrohres von der Stirnseite des Wickels her, um den Durchgang zu verschließen,

c) Einspritzen einer aushärtbaren Dichtungsmasse in die radialen Durchgänge unter Druck, bis die Dichtungsmasse kreisförmig in die Abstandshalter eingedrungen ist, wobei die Dichtungsmasse in den Retentatabstandshalter mindestens um 25% weiter eindringt als in den Filtratabstandshalter,

d) Aushärtenlassen der Dichtungsmasse,

e) Entfernen des schlüssigen Kolbens aus dem Kernrohr,

f) Ausbohren radialer Kanäle mit einem Durchmesser, der größer als der Durchmesser der kreisförmig in den Filtratabstandshalter eingedrungenen Dichtungsmasse und kleiner als der Durchmesser der kreisförmig in den Retentatabstandshalter eingedrungenen Dichtungsmasse ist.

Geeignete aushärtbare Dichtungsmassen sind dem Fachmann bekannt, beispielsweise Polyurethanmassen oder Epoxidharze.

Der Gegenstand der Erfindung wird anhand der Zeichnungen 1 bis 3 näher erläutert. Dabei zeigen

Fig. 1 einen Retentatabstandshalter mit bereichsweise aufgebrachter Dichtungsmasse und ein zentrales Kernrohr,

Fig. 2 schematisch einen Wickel des erfindungsgemäßen Wickelmoduls,

Fig. 3 schematisch eine Filtrationseinrichtung mit einem erfindungsgemäßen Wickelmodul.

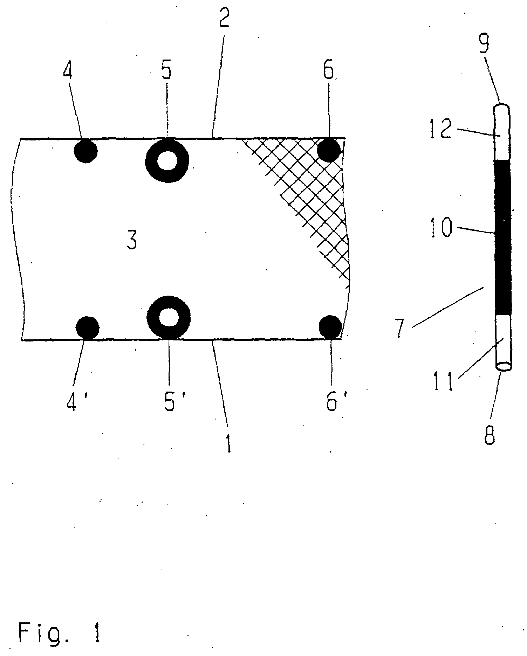

Gemäß Figur 1 ist entlang beider Stirnseiten **1** und **2** eines Retentatabstandshalters **3** der aus einem Gewebe besteht bereichsweise eine aushärtbare Dichtungsmasse **4, 5, 6** aufgebracht. Die Dichtungsmasse **4, 5, 6** und **4', 5', 6'** wird dabei zweckmäßigerweise beidseitig der Fläche des Retentatabstandshalters und derart aufgetragen, daß sie das Abstandshaltermaterial nicht nur durchdringt, sondern geringfügig über der Fläche des Retentatabstandshalters **3** übersteht. Dieser Überstand schafft nach dem Wickeln mit den Membrantaschen und Aushärten eine dichte Verbindung zu den benachbarten Membranen der Membrantaschen. Die Dichtungsmasse kann voll **4, 4', 6,6'** oder ringförmig **5, 5'** oder in beliebig anderer Form ausfgetragen werden. Wichtig ist, daß der Abstand zwischen benachbarten Bereichen **4, 5; 4', 5'** und **5, 6; 5', 6',** die mit Dichtungsmasse angefüllt sind, so berechnet wird, daß die Dichtungsmassenbereiche im Wickel auf einer Geraden liegen, die von der Peripherie des Wickels zu seinem Kernrohr verläuft. Die Größe des sich linear ändernden Abstands zwischen den Dichtungsmassenbereichen hängt von der Dicke der Membrantaschen und der Retentatabstandshaltermaterialien ab und wird nach der Formel für den Kreisumfang berechnet, wenn der Wickel kreisrund ist.

Neben dem Retentatabstandshalter **3** ist ein zentrales Kernrohr **7** dargestellt, das an beiden Stirnseiten **8, 9** offen ist. Ein mittig gelegener Abschnitt **10** des Kernrohres ist geschlossen. Die durch die Dichtmassenbereiche **4** bis **6** und **4'** bis **6'** verlaufenden radialen Kanäle (in Fig. 1 nicht dargestellt) enden innerhalb der offenen Bereiche **11** und **12** des Kernrohres.

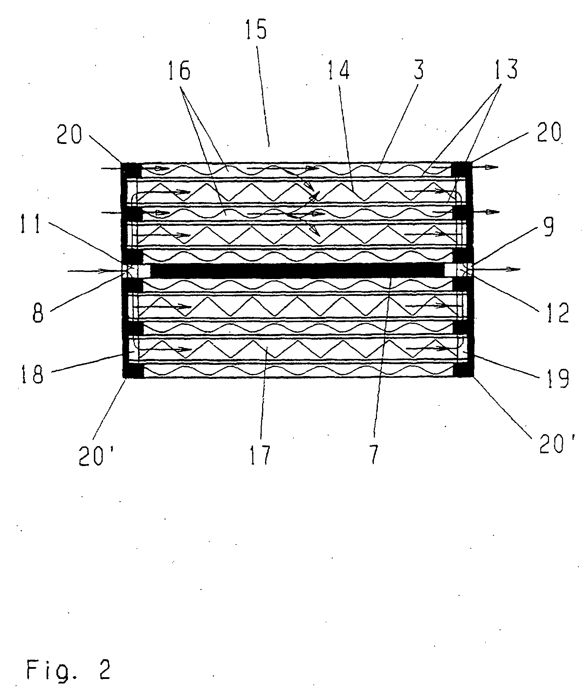

Gemäß Figur 2 sind die um das zentrale an den Stirnseiten **8, 9** offene Kernrohr **7** die Retentatabstandshalter **3** und Membrantaschen **13** mit darin eingeschlossenen Filtratabstandshaltern **14** zu einem Wickel **15** aufgewickelt. Die Retentatabstandshalter **3** bilden Retentatkanäle **16,** durch die das zu filtrierende Fluid über die Membranflächen der Membrantaschen **13** hinwegströmt. Die Filtratabstandshalter **14** bilden Filtratkanäle **17** zum Sammeln und Abführen des Filtrats. Mit den Positionszeichen **18** und **19** sind die radialen Kanäle bezeichnet, die an der Peripherie des Wickels geschlossen **20, 20'** und zu den offenen Bereichen **11** und **12** des Kernrohres 7 hin offen sind.

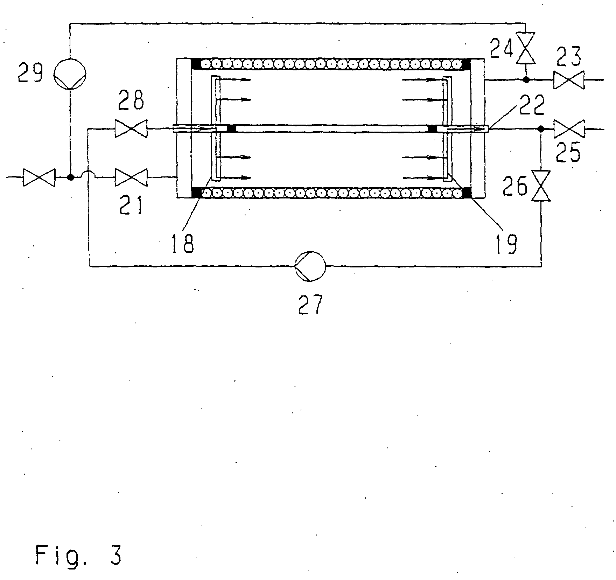

Wie aus der Figur 3 in Verbindung mit der Figur 2 hervorgeht, wird das zu filtrierende Fluid über den Retentateingang **21** in den Wickelmodul unter einem Retentateingangsdruck $p_{RE}$ eingeleitet und durchströmt über die Retentatkanäle **16** die Membranen der Membrantaschen **13.** Das Retentat verläßt den Modul mit einem verminderten Druck $p_{RA}$, wird über das Ventil **23** aus der Filtrationsanlage abgezogen oder über das Ventil **24** im Kreislauf geführt. Das durch die Membranen permeierende Filtrat wird in den Membrantaschen **13** gesammelt und/oder über die Filtratkanäle **17,** und den radialen Kanal **19** zum Filtratausgang 22 unter einem Druck $p_{FA}$ geleitet Es wird über das Ventil **25** in der Regel teilweise abgezogen und/oder über das Ventil **26,** eine Filtratpumpe 27 und ein Ventil **28** in den Modul mit einem Filtrateingangsdruck $p_{FE}$ zurückgeführt. Hier wird es über den radialen Kanal **18** auf die Filtratkanäle **17** verteilt und durchströmt diese gleichgerichtet mit der Strömungsrichtung des Retentats. Über die Ventile **21** und **24** und die Retentatpumpe **29** sowie die Ventile **21** und **26** und die Filtratpumpe **27** kann der für die jeweilige Filtrationsaufgabe optimale Transmembrandruck TMP eingestellt werden. Für den Transmembrandruck gilt die Formel:

$$TMP = (p_{RE} + p_{RA})/2 - (p_{FE} + p_{FA})/2.$$

**Patentansprüche**

1. Für die Crossflow-Filtration zu verwendender Wikkelmodul aus einem Gehäuse mit einem darin angeschlossenen Wickel (15), der aus Membrantaschen (13) und Abstandshaltern (3, 14) besteht, die spiralförmig um ein zentrales an den Stirnseiten (8, 9) offenes Kernrohr (7) gewickelt sind, wobei Retentatabstandshalter (3) die Außenflächen der Membrantaschen (13) bedecken und Retentatkanäle (16) ausbilden und wobei Filtratabstandshalter (14) im Inneren der Membrantaschen (13) eingeschlossenen sind und Filtratkanäle (17) ausbilden, **dadurch gekennzeichnet, daß** der Wickel (15) von mindestens zwei radialen Kanälen (18, 19) durchsetzt ist, die voneinander in Achsrichtung beabstandet sind und zu den Filtratkanälen (17) und zum Kernrohr (7) hin offen sind und die beiden an den Stirnseiten (8, 9) offenen Enden des Kernrohres (7) durch eine Rückführleitung verbunden sind und ein zwischen den radialen Kanälen (18, 19) liegender Abschnitt (10) des Kernrohres (7) geschlossen ist.

2. Wickelmodul nach Anspruch 1, **dadurch gekennzeichnet, daß** die radialen Kanäle (18, 19) den Wickel (15) im Bereich seiner Stirnseiten durchsetzen.

3. Wickelmodul nach den Ansprüchen 1 und 2, **dadurch gekennzeichnet, daß** der Filtratabstandshalter (14) ein um mindestens 25% geringeres Hohlraumvolumen besitzt als der Retentatabstandshalter (3).

4. Verfahren zur Herstellung eines Wickelmoduls nach Anspruch 1, **gekennzeichnet durch** die Schritte

   a) bereichsweises Einbringen einer aushärtbaren Dichtungsmasse (4, 4', 5, 5', 6, 6') in die Retentatabstandshalter (3) mit gleichem Abstand von den Stirnseiten (1, 2) der Retentatabstandshalter (3) aber mit linear zunehmendem Abstand der Bereiche zueinander derart, daß im Wickel (15) die mit Dichtungsmasse (4, 4', 5, 5', 6, 6') angefüllten Bereiche der Retentatabstandshalter (3) auf einer Geraden liegen, die von der Peripherie des Wickels (15) zu seinem Kernrohr (7) verläuft, und daß die Dichtungsmasse (4, 4', 5,5', 6, 6') über der Fläche der Abstandshalter (3) übersteht,

b) Wickeln von Membrantaschen (13) mit im Innern befindlichen Filtratabstandshaltern (14) und von nach Schritt a) vorbehandelten Retentatabstandshaltern (3), die eine Außenfläche der Membrantaschen (13) bedekken, um das zentrale Kernrohr (7) zu dem Wickel (15),

c) Ausbilden von mindestens zwei radialen Kanälen (18, 19) **durch** den Wickel (15), die sich von der Peripherie des Wickels (15) bis in das Innere des offenen Kernrohres (7, 11, 12) an jeder Stirnseite (8, 9) des Wikkels (15) erstrekken und innerhalb der mit Dichtungsmasse (4, 4', 5, 5', 6, 6')angefüllten Bereiche der Retentatabstandshalter (3) verlaufen,

d) Verschließen der Kanäle (18, 19) an der Peripherie (20, 20') des Wickels (15) und

e) Aushärtenlassen der Dichtungsmasse (4, 4', 5, 5', 6, 6').

**5.** Verfahren zur Herstellung eines Wickelmoduls nach Anspruch 3, **gekennzeichnet durch** die Schritte

a) Ausbilden von mindestens zwei radialen Durchgängen (18, 19) **durch** den Wickel (15), die voneinander in Achsrichtung beabstandet sind und sich von der Peripherie (20, 20') des Wickels (15) bis in das Innere des offenen Kernrohres (7) an jeder Stirnseite (8, 9) des Wickels (15) erstrecken,

b) Einschieben eines schlüssigen Kolbens in den offnen Abschnitt (11, 12) des Kernrohres (7) von der Stirnseite (8, 9) des Wickels (15) her, um den Durchgang zu verschließen,

c) Einspritzen einer aushärtbaren Dichtungsmasse (4, 4', 5, 5', 6, 6') in die radialen Durchgänge (18, 19) unter Druck, bis die Dichtungsmasse (4, 4', 5, 5', 6, 6') kreisförmig in die Abstandshalter (3) eingedrungen ist, wobei die Dichtungsmasse (4, 4', 5, 5', 6, 6') in den Retentatabstandshalter (3) mindestens um 25% weiter eindringt als in den Filtratabstandshalter (14),

d) Aushärtenlassen der Dichtungsmasse (4, 4', 5, 5', 6, 6'),

e) Entfernen des schlüssigen Kolbens aus dem Kernrohr (7),

f) Ausbohren radialer Kanäle (18, 19) mit einem Durchmesser, der größer als der Durchmesser der kreisförmig in den Filtratabstandshalter (14) eingedrungenen Dichtungsmasse (4, 4', 5, 5', 6, 6') und kleiner als der Durchmesser der kreisförmig in den Retentatabstandshalter (3) eingedrungenen Dichtungsmasse ist.

**Claims**

**1.** Wound module which is to be used for crossflow filtration and consists of a housing with a winding (15) arranged therein and consisting of membrane pockets (13) and spacers (3, 4), which are spirally wound around a central core tube (7) open at the end faces (8, 9), wherein retentate spacers (3) cover the outer surfaces of the membrane pockets (13) and form retentate channels (16) and wherein filtrate spacers (14) are included in the interior of the membrane pockets (13) and form filtrate channels (7), **characterised in that** the winding (15) is penetrated by at least two radial channels (18, 19) which are spaced from one another in axial direction and are open towards the filtrate channels (17) and the core tube (7), the two open ends of the core tube (7) at the end faces (8, 9) are connected by a return feed duct and a section (10) of the core tube (7) disposed between the radial channels (18,19) is closed.

**2.** Wound module according to claim 1, **characterised in that** the radial channels (18, 19) penetrate the winding (15) in the region of its end faces.

**3.** Wound module according to claims 1 and 2, **characterised in that** the filtrate spacer has a cavity volume smaller than that of the retentate spacer (3) by at least 25%.

**4.** Method of producing a wound module according to claim 1, **characterised by** the steps:

a) introduction of a hardenable sealing mass (4, 4', 5, 5', 6, 6') regionally into the retentate spacers (3) at equal spacing from the end faces (1, 2) of the retentate spacers (3), but with linearly increasing spacing of the regions from one another in such a manner that in the winding (15) the regions of the retentate spacers (3) filled with hardenable sealing mass (4, 4', 5, 5', 6, 6') lie on a straight line extending from the periphery of the winding (15) to its core tube (7) and that the sealing mass (4, 4', 5, 5', 6, 6') projects over the surface of the spacers (3),

b) winding of membrane pockets (12), with filtrate spacers (14) and retentate spacers (3), which are pretreated in accordance with step a) and cover an outer surface of the membrane pockets (13), disposed in the interior, around the central core tube (7) to form the winding (15),

c) formation of at least two radial channels (18, 19) through the winding (15), which channels extend from the periphery of the winding (15) up to the interior of the open core tube (7, 11, 12) at each end face (8, 9) of the winding (15) and run within the regions of the retentate spacers (3) filled with sealing mass (4, 4', 5, 5', 6, 6'),
d) closing of the channels (18, 19) at the periphery (20, 20') of the winding (15) and
e) allowing the sealing mass (4, 4', 5, 5', 6, 6') to harden.

**5.** Method of producing a wound module according to claim 3, **characterised by** the steps:

a) formation of at least two radial passages (18, 19) through the winding (15), which are spaced from one another in axial direction and extend from the periphery (20, 20') of the winding (15) into the interior of the open core tube (7) at each end face (8, 9) of the winding (15),
b) insertion of a closure piston into the open section (11, 12) of the core tube (7) from the end face (8, 9) of the winding (15) so as to close the passage,
c) injection of a hardenable sealing mass (4, 4', 5, 5', 6, 6') into the radial passages (18, 19) under pressure until the sealing mass (4, 4', 5, 5', 6, 6') has penetrated circularly into the spacers (3), wherein the sealing mass (4, 4', 5, 5', 6, 6') penetrates at least 25% further into the retentate spacers (3) than into the filtrate spacers (14),
d) allowing the sealing mass (4, 4', 5, 5', 6, 6') to harden,
e) removal of the closure piston from the core tube (7) and
f) drilling radial channels (18, 19) with a diameter larger than the diameter of sealing mass (4, 4', 5, 5', 6, 6') circularly penetrated into the filtrate spacers (14) and smaller than the diameter of the sealing mass circularly penetrated into the retentate spacers (3).

**Revendications**

**1.** Module à membranes enroulées destiné à être utilisé pour la filtration crossflow, comportant un carter dans lequel est raccordé un rouleau (15) qui est constitué de poches à membrane (13) et d'écarteurs (3, 14), qui sont enroulés en forme de spirale autour d'un noyau tubulaire central (7) ouvert au niveau des faces frontales (8, 9), des écarteurs de rétentat (3) recouvrant les faces extérieures des poches à membrane (13) et formant des canaux de rétentat (16), et des écarteurs de filtrat (14) étant insérés à l'intérieur des poches à membrane (13) et formant des canaux de filtrat (17),
    **caractérisé en ce que**

le rouleau (15) est traversé par au moins deux canaux radiaux (18, 19) qui sont espacés l'un de l'autre dans la direction axiale, et qui sont ouverts vers les canaux de filtrat (17) et vers le noyau tubulaire (7), **en ce que** les deux extrémités ouvertes au niveau des faces frontales (8, 9) du noyau tubulaire (7) sont reliées par une conduite de retour, et **en ce qu'**un tronçon (10) du noyau tubulaire (7) situé entre les canaux radiaux (18, 19) est fermé.

**2.** Module à membranes enroulées selon la revendication 1,
    **caractérisé en ce que**
les canaux radiaux (18, 19) traversent le rouleau (15) dans la zone de ses faces frontales.

**3.** Module à membranes enroulées selon la revendication 1 ou 2,
    **caractérisé en ce que**
le volume de l'espace creux de l'écarteur de filtrat (14) est d'au moins 25 % inférieur à celui de l'écarteur de rétentat (3).

**4.** Procédé destiné à la fabrication d'un module à membranes enroulées selon la revendication 1,
    **caractérisé par** les phases suivantes :

a) application par zones d'une masse d'étanchéité durcissable (4, 4', 5, 5', 6, 6') dans les écarteurs de rétentat (3) à un même écartement des faces frontales (1, 2) des écarteurs de rétentat (3), mais à un écartement augmentant de façon linéaire entre les zones, de telle sorte que les zones des écarteurs de rétentat (3) remplies de masse d'étanchéité (4, 4', 5, 5', 6, 6') soient situées dans le rouleau (15) sur une droite qui s'étend de la périphérie du rouleau (15) vers son noyau tubulaire (7), et que la masse d'étanchéité (4, 4', 5, 5', 6, 6') dépasse de la surface des écarteurs (3),
b) enroulement autour du noyau tubulaire central (7) en un rouleau (15) de poches à membrane (13) avec des écarteurs de filtrat (14) situés à l'intérieur et des écarteurs de rétentat (3) préalablement traités d'après la phase a), qui recouvrent une face extérieure des poches à membrane (13),
c) réalisation d'au moins deux canaux radiaux (18, 19) à travers le rouleau (15) qui, sur chaque face frontale (8, 9) du rouleau (15), s'étendent de la périphérie du rouleau (15) jusqu'à l'intérieur du noyau tubulaire (7, 11, 12) ouvert, et passent à l'intérieur des zones des écarteurs de rétentat (3) remplies de masse d'étanchéité (4, 4', 5, 5', 6, 6'),
d) fermeture des canaux (18, 19) à la périphérie (20, 20') du rouleau (15), et
e) durcissement de la masse d'étanchéité (4, 4', 5, 5', 6, 6').

**5.** Procédé destiné à la fabrication d'un module à membranes enroulées selon la revendication 3, **caractérisé par** les phases suivantes :

a) réalisation d'au moins deux passages radiaux (18, 19) à travers le rouleau (15), qui sont espacés l'un de l'autre dans la direction axiale et qui, sur chaque face frontale (8, 9) du rouleau (15), s'étendent de la périphérie (20, 20') du rouleau (15) jusqu'à l'intérieur du noyau tubulaire (7) ouvert,

b) insertion à partir des faces frontales (8, 9) du rouleau (15) d'un piston d'extrémité dans le tronçon ouvert (11, 12) du noyau tubulaire (7) afin de fermer le passage,

c) injection sous pression d'une masse d'étanchéité durcissable (4, 4', 5, 5', 6, 6') dans les passages radiaux (18, 19) jusqu'à ce que la masse d'étanchéité (4, 4', 5, 5', 6, 6') ait pénétré de façon circulaire dans les écarteurs (3), la masse d'étanchéité (4, 4', 5, 5', 6, 6') pénétrant d'au moins 25 % plus loin dans les écarteurs de rétentat (3) que dans les écarteurs de filtrat (14),

d) durcissement de la masse d'étanchéité (4, 4', 5, 5', 6, 6'),

e) retrait du piston d'extrémité du noyau tubulaire (7),

f) perçage de canaux radiaux (18, 19) d'un diamètre qui est supérieur au diamètre de la masse d'étanchéité (4, 4', 5, 5', 6, 6') qui a pénétré de façon circulaire dans les écarteurs de filtrat (14), et inférieur au diamètre de la masse d'étanchéité qui a pénétré de façon circulaire dans les écarteurs de rétentat (3).

Fig. 1

Fig. 2

Fig. 3